# EUROPEAN PATENT APPLICATION

(11) **EP 2 657 851 A1**
(43) Date of publication of application: **30.10.2013**
(21) Application number: 13164333.0
(22) Date of filing: 18.04.2013
(51) Int. Cl.: G06F 17/22

(54) **Partition based structured document transformation**

(30) Priority: 26.04.2012 CN 201210126487; 04.05.2012 US 201213463833
(71) Applicant: SAP AG, 69190 Walldorf (DE)
(72) Inventor: Fu, Leon, 69190 Walldorf (DE); Hu, Yingkun, 69190 Walldorf (DE); Min, Xianlong, 69190 Walldorf (DE); Peng, Shengcai, 69190 Walldorf (DE); Zhang, Ray, 69190 Walldorf (DE)
(74) Representative: Richardt Patentanwälte GbR

(57) **Abstract**

Various embodiments of systems and methods for transforming a source structured document (108) to a target document are described herein. A request is received for transforming a source structured document. The source structured document is divided into many portions (110, 112). A transformation rule is applied one by one on the portions of source structured document to obtain portions of the target document (104). The target document is generated based on the obtained portions of the target document.

## Description

### FIELD

Embodiments generally relate to computer systems, and more particularly to methods and systems for transforming structured documents.

### BACKGROUND

Several reporting software, such as SAP® Business One, transform business data, received in form of a structured document, into another format according to the requirement of the user. In many cases, instructions may be provided for transforming the structured document into another format. For example, an extensible stylesheet transformation language (XSLT) may be defined to translate an extensible markup language (XML) document, which is a structured document, to another structured or unstructured document form (such as plain text, word processor, spreadsheet, database, pdf, HTML, etc.).

Typically, for transforming an XML document, XSLT builds a Document Object Model (DOM) tree, which has a node corresponding to each element of the XML document. The XSLT then performs the transformation operation on the created DOM tree. A DOM tree consumes memory size linear to the size of XML document. The process of XSL transformation typically consumes a memory space being several times larger than the size of the XML document to be transformed. Therefore, if the size of the XML document or the size of the memory consumed during XSL transformation is more than the available system memory then the transformation process may throw an out of memory exception. Therefore, in applications and systems designed for managing and processing large amounts of data, the available memory space is a (potential) bottle neck which is typically avoided by increasing the amount of available main memory. This may be expensive and may be a waste of hardware resources in systems where XSL transformation of large datasets are executed only occasionally.

### SUMMARY OF INVENTION

The present invention provides a computer-implemented method, computer-readable storage medium and a computer system as claimed in the independent claims. Embodiments of the invention are given in the dependent claims. If not explicitly stated otherwise, embodiments of the invention can be freely combined with each other.

A 'structured document' as used herein is an electronic document structured in accordance with one or more structured definition languages, such as HTML (Hyper Text Markup Language), XML (Extensible Markup Language), or WSDL (Web Service Definition Language). The structured document may be in form of a hierarchical tree of nodes. Each node may have a name, value, and other associated information.

A ,source structured document' as used herein is a structured document used as input of a data processing method for transforming said input into a target document. The target document may be structured or unstructured. An example of such a transformation is an XSL transformation.

A 'transformation rule' as used herein is a piece of program logic which takes a source structured document or a portion thereof as input for modifying the content and/or formatting of the source structured document in a defined and automated manner for generating a target document. Depending on the embodiment, the rule may be implemented as a command, as a script of a scripting language, as a method of an object instance or the like. The rule may be specified in a program language such as ABAP, Java, Perl, or the like. In particular, the rule may be implemented as an XSLT style sheet or parts thereof.

A 'placeholder' as used herein is a an element within a document used as a container for a particular data value. Preferentially, said data value, e.g. a URI, is adapted for identifying a document or a document portion.

A 'uniform resource identifier' (URI) as used herein is a string of characters used to identify a name or a resource, e.g. a particular document or document portion or a file or a database record.

In one aspect, the invention relates to a computer implemented method for transforming a source structured document to a target document. The method comprises:
- receiving a request to transform the source structured document;
- receiving a selection of a first node and one or more further nodes in the source structured document, the first node identifying a first portion of the source structured document, and each of the one or more further nodes identifying a further portion of the source structured document;
- based on the received selection, dividing the source structured document into the first portion and the one or more further portions of the source structured document;
- based on a transformation rule, transforming the first portion of the source structured document to obtain a first portion of the target document;
- based on the transformation rule, transforming the one or more further portions of the source structured document to obtain one or more further portions of the target document; and
- generating the target document based on the obtained first portion of the target document and the obtained one or more further portions of the target document.

Said features may be advantageous as they allow transforming also very large source structured documents into a target document in systems with very limited main memory. For example, transforming a source structured document of 1 GMB into a target document via conventional XSL transformation may consume five times the size of the source document of the main memory, i.e., 5 GB. Thus, a system having only 4 GB of main memory will fail to execute the transformation. By executing the above method, the source structured document may be split, for example, into 5 document portions respectively being about 200 MB large. The XSL transformation of each document portion will consume only 1 GB. Thus, by means of the method as described above, a computer system comprising only 1 GB of main memory may be enabled to execute an XSL transformation requiring in total about 5 GB of main memory.

According to preferred embodiments, the method is executed fully automatically by a processor of a computer. For example, the method may be executed by an application program, e.g. a data warehouse system, a CRM system, an ERP system, or any other kind of software based application program logic. The method may also be performed by a dedicated module of said application program. The request may be received by said application program (or module thereof) from a user via a user interface, from another one of a plurality of modules constituting the application program or from another application program. In particular, the request may be received from a data collection module or application program having gathered data from a plurality of data sources such as databases, text files, binaries, or the like for providing a composite and/or aggregated set of data. The collected data may be combined in a single structured document, e.g. an XML document, referred herein as 'source structured document'. Said document may comprise the collected data in the form of a graph of nodes.

The selection of a first node may be triggered by a user selecting a graphical user interface (GUI) element representing said node, or may be triggered by the other application program interfacing with the application program. Likewise, the selection may be triggered by a software module being an integral part of the application program comprising the dedicated module.

According to embodiments, the method comprises providing a user interface to a user. The user interface enables the user to specify the portion identifier elements which are to be selected automatically for executing the transformation. In addition, or alternatively, the method comprises automatically determining the available free main memory size and automatically selecting, in dependence on the determined available free main memory size, one or more of a plurality of candidate document

portion identifier elements. The smaller the memory size, the more source document portions are generated. Said features may be advantageous as they provide for a method which is flexibly adaptable or even automatically adapts itself to the amount of actually available free main memory.

Depending on the embodiment, the URI may be link, a file system path or a database record identifier or any other kind of identifier or pointer that is adapted to identify a particular document or part thereof, to identify a file, a database record or any other kind of data structure.

According to embodiments, the transformation of the first and each of the further document portions is executed in a sequential order. Each of the source document portions to be transformed is loaded into a main memory of a computer for executing the transformation. Said features may reduce the consumption of main memory, may help to avoid swapping and thus may also increase performance of executing the transformation.

According to embodiments the method further comprises:
- storing, in a data storage of a computer, the first portion of the structured document as a first structured document file, the first structured document files being identifiable via a first URI;
- storing, in the data storage, each of the one or more further portions of the source structured document as a further structured document file, the each of the further structured document files being identifiable via a respective further URI; and
- storing a first placeholder comprising the first URI and one or more further placeholders respectively comprising one of the further URIs and a remaining portion of the source structured document in a source structured document index file.

Said features may be advantageous as the placeholders consume much less storage space than the source structured document. Thus, the source structured document index file is typically comparatively small.

According to other embodiments the data storage is a non-volatile storage medium acting as main memory. This may be advantageous as the access times of the main memory are typically much smaller than the time required for executing I/O operations on a non-volatile storage medium such as an electromagnetic hard disc.

According to embodiments the data storage is a non-volatile storage medium. The source structure document portions may be stored in the main memory and may in addition be stored on the non-volatile storage medium. This may render a re-execution of the splitting-operation obsolete in case of a data loss caused e.g. by an interruption of the power supply.

According to embodiments the transformation rules executing the transformation are contained in different transformation files, each transformation file corresponding to one of the first and one or more further document portions. Said features may ease the management of the transformation rules and further decrease the memory consumptions as only the transformation rules required for a particular document portion need to be loaded into memory.

According to embodiments, transforming the first portion of the structured document comprises:
- based on the transformation rule, transforming the source structured document index file to obtain an interim result file, the interim result file including the first placeholder, the one or more further placeholders, and a transformation result of the remaining portion of the source structured document;
- identifying, the first placeholder included in the interim result file;
- retrieving, from the data storage, the first structured document file referred by the first URI contained in the identified first placeholder; and
- based on the transformation rule, transforming the first structured document file to obtain the first portion of the target document.

Said features may be advantageous as the interim result file comprises an URI in a placeholder instead of a document portion and is thus of comparatively small size that can be held in memory.

According to embodiments, the interim result file is stored on a non-volatile storage medium upon each replacement of a placeholder by a target document portion. Thus, even in case of a system failure resulting in the erasing of all data in the main memory, the already transformed document portions are still available in the result file and thus do not need to be recalculated.

According to embodiments, transforming the one or more further portions of the structured document includes:
- identifying the one or more further placeholders included in the interim result file;
- retrieving, from the data storage, the one or more further structured document files referred by the further URIs contained in the one or more further placeholders; and
- based on the transformation rule, transforming the one or more further structured document files to obtain the one or more further portions of the target document.

According to embodiments, generating the target document includes:
- replacing the first portion of the source structured document with the obtained first portion of the target document; and
- replacing the one or more further portions of the source structured document with the obtained one or more further portions of the target document.

The replacement may further help to reduce memory consumption. By replacing parts of the source document already held in memory rather than creating the target document in addition to the source document, the available maim memory can be used more effectively.

According to embodiments, the transforming of the first and the one or more source structured document portions is an XSL transformation.

According to embodiments, the identification of the first source structured document portion by selecting the first node comprises gathering all direct and indirect child nodes of the selected node. The gathered nodes constitute the first source structured document portion.

According to other embodiments, the identification of the first source structured document portion by selecting the first node comprises gathering all nodes in the source structured document being of the same type as the selected node, whereby the gathered nodes constitute the first source structured document portion.

According to embodiments the nodes contained in the source structured document constitute a connected graph with two or more hierarchical levels and a root node at the top of the hierarchy. The method further comprises automatically determining a current size of available main memory. The selection of the first node and one or more further nodes in the source structured document is executed in dependence on the determined current size, wherein the larger the amount of available memory, the higher the hierarchical level whose nodes are selected and the smaller the amount of available memory, the lower the hierarchical level whose nodes are selected.

In a further aspect, the invention relates to a computer implemented method for transforming a source structured document to a target document, the method comprising:
- receiving a selection of a first node in the source structured document, the selected first node identifying a first portion of the source structured document;
- receiving a selection of one or more further nodes in the source structured document, each of the selected one or more further nodes identifying a further portion of the source structured document;
- based on the defined first placeholder and the defined one or more further placeholders, dividing the source structured document into the first portion and the one or more further portions;
- storing a first placeholder for the first document portion, a further placeholder for each of the one or more further document portions and a remaining portion of the source structured document in a source structured document index file;
- based on a transformation rule, transforming the source structured document index file to obtain an interim result file including the first placeholder, the one or more further placeholders, and a transformation result of the remaining portion of the source structured document;
- identifying the first placeholder included in the interim result file;
- retrieving, from a data storage of a computer, the first portion of the source structured document referred by a first URI contained in the first placeholder;
- based on the transformation rule, transforming the first portion of the source structured document to obtain a first portion of the target document;
- identifying the one or more further placeholders included in the interim result file;
- retrieving, from the data storage, the one or more further portions of the source structured document identified by further URIs contained in the one or more further placeholders;
- based on the transformation rule, transforming the one or more further portions of the source structured document to obtain one or more further portions of the target document; and
- generating the target document based on the first portion of the target document, the one or more further portions of the target document, and the transformation result of the remaining portion of the source structured document.

According to embodiments, the data storage is a non-volatile storage medium and the method further comprises:
- storing, in the data storage, the first portion of the source structured document as a first structured document file, the first URI in the first placeholder of the source structured document index file referring the first structured document file; and
- storing, in the data storage, the one or more further portions of the source structured document are stored as one or more further structured document files, the further URIs in the one or more further placeholders referring the one or more further structured document files.

According to alternative embodiments, the data storage is a main memory, the method further comprising:
- storing, in the data storage, the first portion of the source structured document, the first URI in the first placeholder of the source structured document index file being a pointer to the first structured document in the main memory; and
- storing, in the data storage, the one or more further portions of the source structured document are stored, each of the further URIs in the one or more further placeholders being a pointer to one of the one or more further structured documents in the main memory.

According to embodiments, transforming the document portions comprises executing a transformation rule on the source structured document index file, the execution comprising:
- reading the first portion of the source structured document from the storage using the URI of said portion and transforming the read first portion into the first portion of the target document; and
- reading each of the further portions of the source structured document from the storage using the respective URI of said portions and transforming the read further portion into the one or more further portions of the target document.

The stepwise, sequential accessing of the placeholders for reading a URI, for reading a structured source document portion identified via said URI into memory, for transforming the read portion into a respective portion of the target document and for finally assembling the target document from the individual target document portions may reduce memory consumption as the transformation is executed in a sequential manner for document portions and not for the whole source document at once.

The target document may be created in the main memory in addition to the source structured document, e.g. by filling placeholders in the source structure document index files formerly comprising a URI, or by replacing respective portions of the source structured document portions. The latter approach may consume less memory than the first approach.

In a further aspect, the invention relates to a computer readable storage medium comprising instructions which, when executed by a processor, cause the processor to execute a method in accordance with any one of the previous embodiments.

In a further aspect, the invention relates to a computer system for transforming a source structured document to a target document. The computer system comprises a memory to store a program code and a processor communicatively coupled to the memory. The processor is configured to execute the program code to:
o receiving a request to transform the source structured document;
o receiving a selection of a first node and one or more further nodes in the source structured document, the first node identifying a first portion of the source structured document, and each of the one or more further nodes identifying a further portion of the source structured document;
o based on the received selection, dividing the source structured document into the first portion and the one or more further portions of the source structured document;
o based on a transformation rule, transforming the first portion of the source structured document to obtain a first portion of the target document;
o based on the transformation rule, transforming the one or more further portions of the source structured document to obtain one or more further portions of the target document; and
o generating the target document based on the obtained first portion of the target document and the obtained one or more further portions of the target document.

In a further aspect the invention relates to an article of manufacture including a computer readable storage medium to tangibly store instructions. When the instructions are executed by a computer, the instructions cause the computer to:
- receive a request to transform a source structured document;
- receive a selection of a first node and one or more further nodes in the source structured document, the first node defined as a first placeholder, and the one or more further nodes defined as one or more further placeholders;
- based on the received selection, divide the source structured document into a first portion and one or more further portions of the source structured document, the first placeholder referring to the first portion of the source structured document, the one or more further placeholders referring to the one or more further portions of the source structured document;
- based on a transformation rule, transform the first portion of the source structured document to obtain a first portion of a target document;
- based on the transformation rule, transform the one or more further portions of the source structured document to obtain one or more further portions of the target document; and
- generate the target document based on the obtained first portion of the target document and the obtained one or more further portions of the target document.

According to embodiments the article of manufacture further comprises instructions which when executed by the computer further causes the computer to:
- based on the defined first placeholder and the one or more further placeholders, divide the source structured document into the first portion and the one or more further portions of the source structured document.

According to embodiments the article of manufacture further comprises instructions which when executed by the computer further causes the computer to:
- store the first portion of the structured document as a first structured document file, the first placeholder referring the first structured document file;
- store the one or more further portions of the source structured document as one or more further structured document files, the one or more further placeholders referring the one or more further structured document files; and
- store the first placeholder, the one or more further placeholders, and a remaining portion of the source structured document in a source structured document index file.

According to embodiments the article of manufacture further comprises instructions which when executed by the computer further causes the computer to:
- based on the transformation rule, transform the source structured document index file to obtain an interim result file, the interim result file including the first placeholder, the one or more further placeholders, and a transformation result of the remaining portion of the source structured document;
   identify the first placeholder included in the interim result file;
- retrieve the first structured document file referred by the identified first placeholder; and
- based on the transformation rule, transform the first structured document file to obtain the first portion of the target document.

According to embodiments the article of manufacture further comprises instructions which when executed by the computer further causes the computer to:
- identify the one or more further placeholders included in the interim result file;
- retrieve the one or more further structured document files referred by the one or more further placeholders; and
- based on the transformation rule, transform the one or more further structured document files to obtain the one or more further portions of the target document.

### BRIEF DESCRIPTION OF THE DRAWINGS

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.
FIG. 1 is a block diagram illustrating a method for transforming a source structured document to a target document, according to an embodiment.
FIG. 2 is a detailed flow diagram illustrating a method for transforming a source structured document to a target document, according to an embodiment.
FIG. 3 is an exemplary block diagram illustrating a source structured document index file, according to an embodiment.
FIGS. 4A-B is an exemplary block diagram illustrating a transformation file for transforming the source structured document index file of FIG. 3, according to an embodiment.
FIG. 5 illustrates an exemplary block diagram illustrating an interim result file obtained after transforming the source structured document index file of FIG. 3 using the transformation file of FIG. 4, according to an embodiment.
FIG. 6 is an exemplary block diagram illustrating a first portion of audit data file referred by a first URI in a first placeholder in the interim result file of FIG. 5, according to an embodiment.
FIG. 7 is an exemplary block diagram illustrating a second portion of audit data file referred by a second URI in a second placeholder in the interim result file of FIG. 5, according to an embodiment.
FIGS. 8A-B is an exemplary block diagram illustrating a transformation file for transforming the first portion of audit data file of FIG. 6 and the second portion of audit data file of FIG. 7, according to an embodiment.
FIG. 9 is an exemplary block diagram illustrating a first portion of the target document obtained after transforming the first portion of audit data included in the first file of FIG. 6, according to an embodiment.
FIG. 10 is an exemplary block diagram illustrating a second portion of the target document obtained after transforming the second portion of audit data included in the second portion of the audit data file of FIG. 7, according to an embodiment.
FIG. 11 is an exemplary block diagram illustrating a target document obtained based on the first portion of the target document of FIG. 9, the second portion of the target document of FIG. 10, and the interim result file of FIG. 5, according to an embodiment.
FIG. 12 is a block diagram illustrating a computing environment in which the techniques described for fault tolerance based query execution can be implemented, according to an embodiment.

### DETAILED DESCRIPTION

Embodiments of techniques for partition based structured document transformation are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

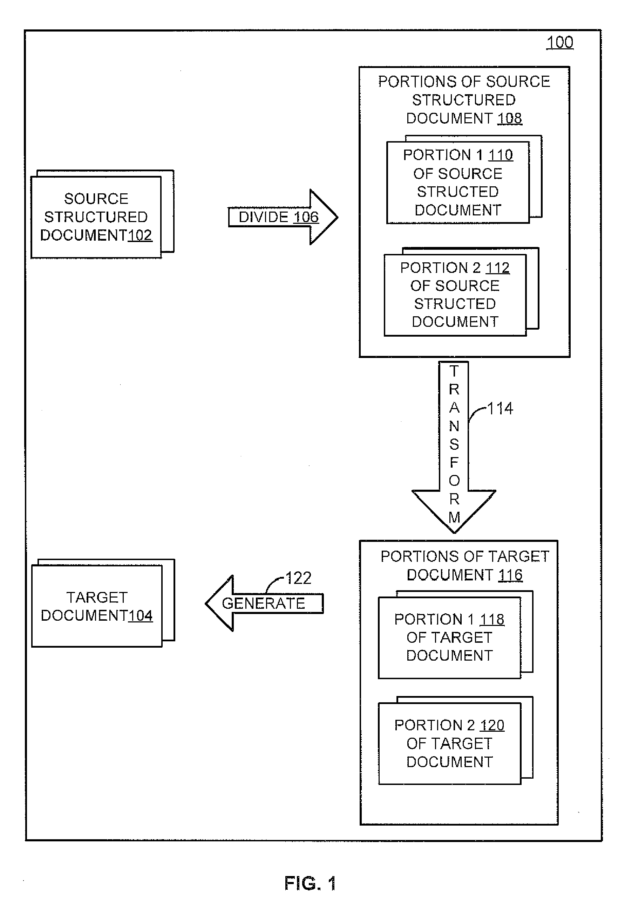

FIG. 1 is a block diagram 100 illustrating a method for transforming a source structured document 102 to a target document 104, according to an embodiment. A structured document is an electronic document structured in accordance with one or more structured definition languages. For example, consider a source XML document, of a school:

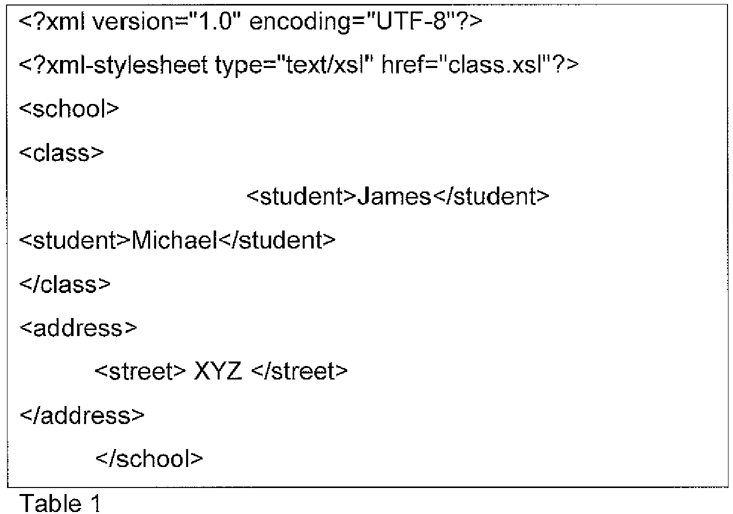

The source XML document, shown in Table 1, includes nodes <school>, <class> <student>, <address> and <street>. The node <student> has values James and Michael and the node <street> has value XYZ. The transformation operation may be performed on the source structured document 102 to obtain a target document 104 according to the requirement of the user. For transforming the source structured document 102, initially a divide operation 106 is performed on the source structured document 102 to obtain several portions 108 of the source structured document 102. The source structured document 102 may be divided based on the nodes in the source structured document 102. As shown, the source structured document 102 is divided into a portion 1 110 and a portion 2 112 of the source structured document 102. In the above example, the source structured document depicted in Table 1 and comprising an XML node of type "class" followed by an XML element of another type "address", may be divided according to the node type (here: <class> node and the <address> node) to obtain two portions of the source structured document, shown in Table 2 and Table 3, respectively.

**Table 2 and**

| | |
|---|---|
| (Portion 1) | |
| | <student>James</student> |
| | <student>Michael</student> |

**Table 3**

| | |
|---|---|
| (Portion 2) | <street> XYZ </street> |

Next a transform operation 114 may be performed on the portions of the source structured document 108 to obtain portions 116 of the target document 104. The transform operation 114 may be performed in several steps, at each step one of the portions 108 of the source structured document 102 may be transformed to obtain one of the portions 116 of the target document 104.

For example, the transformation steps respectively taking a source structure document portion as input and generating a target document portion as output may be executed on a single processor in a sequential manner. Only one transformation is executed at a time. Thus, the consumption of the main memory at any moment in time is limited to the memory consumption of a transformation step of a single document portion.

For example, a transform operation 114 may be performed on the portion 1 110 of the source structured document 102 to obtain a portion 1 118 of the target document 104. Next a transform operation 114 may be performed on the portion 2 112 of the source structured document 102 to obtain a portion 2 120 of the target document 104. In one embodiment, transformation rules are defined to transform portions 108 of the source structured document 102 to obtain portions of the target document 116. In the above example, transformation rules may be defined to transform the <student> node, included in the portion 1 of the source structured document, shown in Table 2, to a "FOUND A LEARNER" output and the <street> node, included in the portion 2 of the source structured document, shown in Table 3, to a value of <street> node (XYZ) output. Using the transformation rule, the portion 1 of the source structured document, shown in Table 2, may be first transformed to obtain a portion 1 of the target document, shown in Table 4, which includes:

**Table 4**

| | |
|---|---|
| (Portion 1) FOUND A LEARNER | |
| | FOUND A LEARNER |

Next, the transformation rule may be applied to portion 2 of the source structured document, shown in Table 3, to obtain a portion 2 of the target document, shown in Table 5, which includes.

**Table 5**

| |
|---|
| (PORTION 2) XYZ |

Finally, a generate operation 122 is performed to generate the target document 104 using the obtained portions of the target document 116. The target document 104 may be generated by combining the obtained portion 1 118 and the obtained portion 2 120 of the target document 104. The combination may be implemented as concatenation. In the above example, the portion 1, shown in Table 4, and portion 2 of the target document, shown in Table 5, are combined to obtain the target document, shown in Table 6, which includes:

**Table 6**

| |
|---|
| FOUND A LEARNER |
| FOUND A LEARNER |
| XYZ |

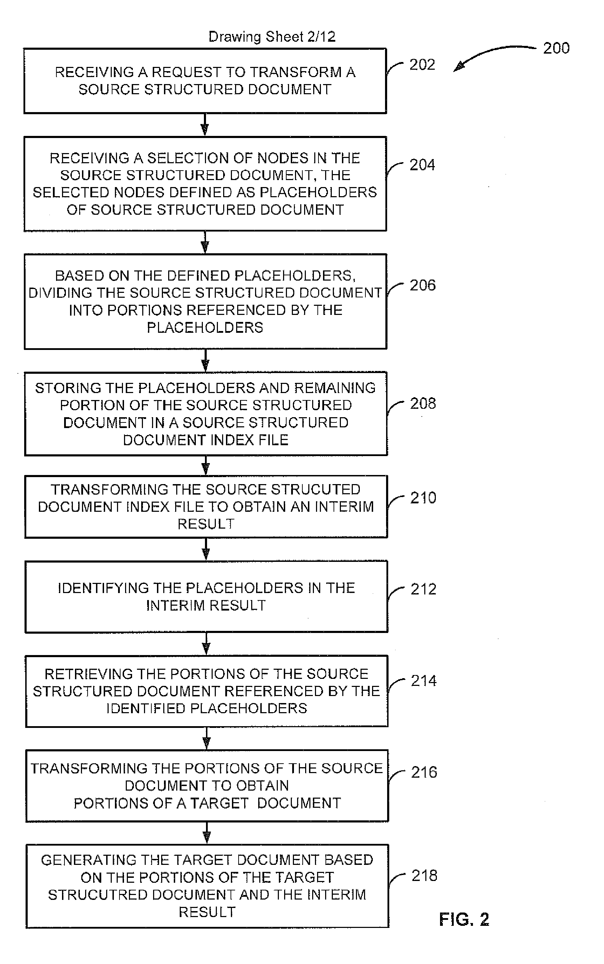

FIG. 2 is a detailed flow diagram 200 illustrating a method for transforming a source structured document to a target document, according to an embodiment. Initially at block 202 a request is received for transforming the source structured document. The source structured document may be structured in accordance with any one of the standard structured document languages such as XML, HTML, WSDL, and the like. The source structured document, for example an XML document, may have a tree structure, which may have a root object, branch objects, and leaf objects. Each of the root object, branch object, and leaf object are nodes of the structured document. The node may have a corresponding node value or any other information associated with the node. The source structured document may include source data, such as business data, or any other data.

For example, a source XML document, shown in Table 7, representing business data of several companies includes:

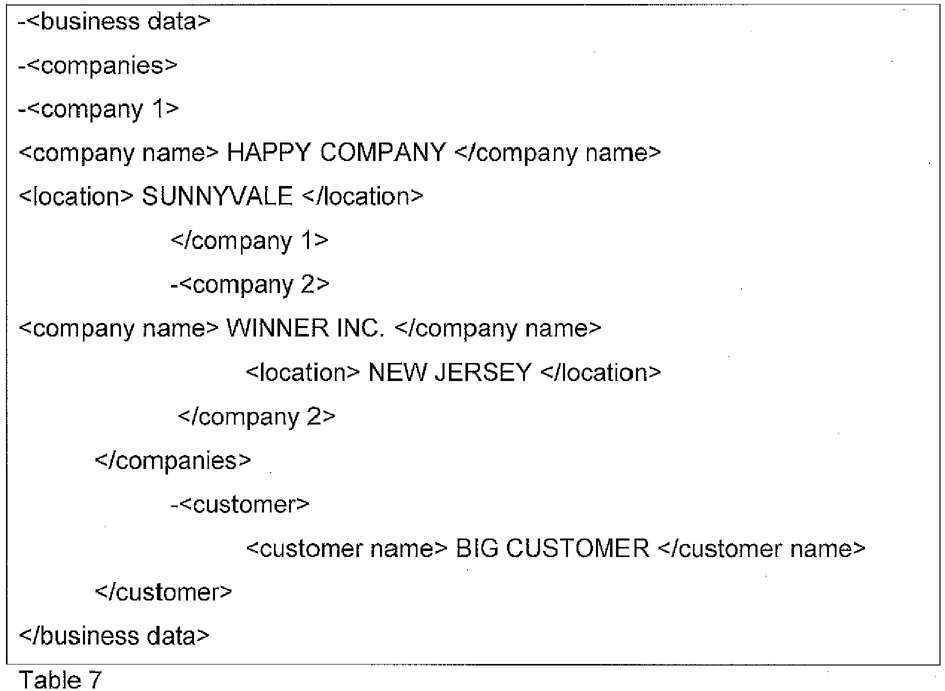

In the above example, <business data> is a root node, <companies>, <company 1>, <company 2> and <customer> are branch nodes, and <company name>, <location>, and <customer name> are leaf nodes. The node <company name> has values HAPPY COMPANY and WINNER INC., the node <location> has values SUNNYVALE and NEW JERSEY, and the node <CUSTOMER NAME> has value BIG CUSTOMER.

Next at block 204 nodes in the source structured document are selected, for partitioning the source structured document. A user may select one or more nodes from the source structured document as document portion identifier elements, based on which the user wants to divide the source structured document. A display tool may be provided which displays the source structured document to the user. The user may select one or more nodes from the displayed source structured document. In one embodiment, the system may allow the user to select only some of the nodes in the structured document for dividing the source structured document. For example, the user may be allowed to select only the root node and the branch nodes but not the leaf nodes. In the above example, the source structured document may be presented to the user. The user may be allowed to select only the root node <business data> and the branch nodes <companies>, <company 1>, <company 2>, and <customer>. Assume that the user selects the branch nodes <companies>, <company 1> and <company 2>.

The selected nodes may be defined as placeholders for the source structured document. A placeholder is a node that refers to a portion of the source structured document. For example, a particular selected node may identify all its direct and indirect child nodes, whereby said identified child nodes constitute the document portion defined and marked by said selected node. In one embodiment, the URIs contained in the placeholders in the source structure document index file is a node that indirectly refers to a portion of the source structured document. In this case, the URI contained in the placeholder (which may be an identifier of an XML document) may refer to another placeholder in the source structure document index file. Said other placeholder in the source structure document index file may comprise another URI refering to a portion of the source structured document. In the above example, the selected nodes <companies>, <company 1>, and <company 2> identify document portions and are used for creating corresponding placeholders in the source structured document index file. The URIs of placeholder <company 1> and the placeholder <company 2> may refer to a portion 1 and a portion 2, respectively, of the source structured document shown in Table 8 and Table 9, respectively.

**Table 8**

| | |
|---|---|
| (portion 1) <company name> HAPPY COMPANY </company name> | |
| | <location> SUNNYVALE </location> |

**Table 9**

| |
|---|
| (portion 2) <company name> WINNER INC. </company name> |
| <location> NEW JERSEY </location> |

The placeholder <companies> in the source structure document index file indirectly refers to the portion 1 and portion 2 of the source structured document, which means that the placeholder <companies> refers to the placeholder <company 1> and the placeholder <company 2> in the source structure document index file which again refer to portion 1 and portion 2, respectively, of the source structured document. Next at block 206, the source structured document may be divided based on the portions of the source structured document referred identified by the selected nodes. Dividing the source structured document may include storing each of the portions of the source structured document as separate structured document files, the files being identifiable by a respective URI, e.g. a file path. The placeholders in the source structure document index file may comprise said URIs refering to the structured document file storing the portion of the source structured document. In the above example, the source structured document is divided into two portions, a portion 1 referred by a first URI of the placeholder <company 1> and a portion 2 referred by a second URI the placeholder <company 2>. A first structured document file (file 1.xml) and a second structured document file (file 2.xml) storing the portion 1 and the portion 2, respectively, of the source structured document may be created. The selected node <company 1>in the source structure document may identify the first structured document portion stored in a first structured document file (file 1.xml) and the second selected node <company 2> may identify a second structured document portions stored in a second structured document file (file 2.xml). Next at block 208, a source structured document index file is created which includes the selected nodes <company 1>, <company 2> as placeholders , whereby the source structured document index file further comprises a remaining portion of the source structured document, which is not referred by any of the placeholders. In the above example, the remaining portion of the source structured document, shown in Table 10, which is not referred by the placeholders <companies>, <company 1> , and <company 2>, includes: -<customer> <customer name> BIG CUSTOMER </customer name> </customer> Table 10 The obtained source structured document index file, is shown in Table 11, which includes:

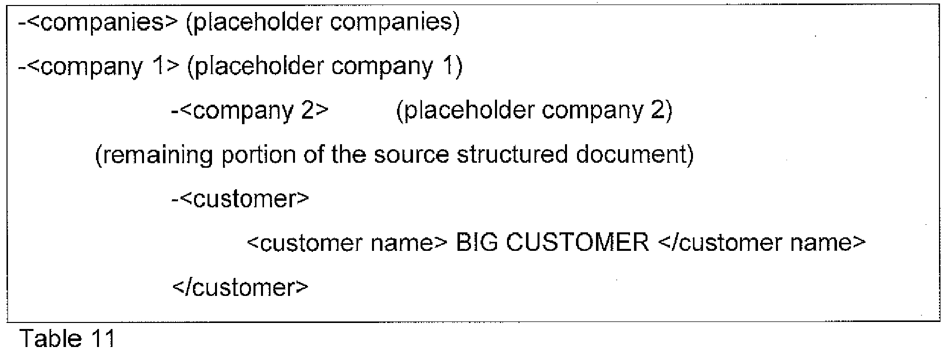

In one embodiment, the source structured document index file may be directly created based on the source data, such as business data, contained in the source structured document. In this case, the user selection may be received to select some document nodes in the source structured document which identify some portions of said source structured document, to define placeholders comprising respective UIRs which refer to said selected nodes and thus refer to different portions of the source structured document. The source structured document index file in this case may include the defined placeholders and the remaining portion of the source data, which is not referred by any of the placeholders.

Next at block 210, the source structured document index file obtained at block 208 is transformed to obtain an interim result. Transformation is a process of transforming an input structured document, on which the transformation is to be applied, to obtain an output target document. In one embodiment, the target document may be in a structured or unstructured document form (such as plain text, word processor, spreadsheet, database, pdf, HTML, etc.). For example, the source structured document may be in XML and the target document may be in XML or HTML, or any other format depending on the requirement of the user. The transformation operation may be performed by transformation files, which include transformation rules for transforming the source structured document to the target document. For example, an XML source document may be transformed into an XML target document using an Extensible Stylesheet Language Transformation (XSLT) file. The XSLT transformation may be performed by an XSLT processor which takes as input an XML source document, and an XSLT stylesheet and produces the target document. The XSLT stylesheet contains a collection of transformation rules, which are instructions and other directives that guide the processor in the production of the target document. The XSLT stylesheet may include transformation rules corresponding to the different nodes in the source structured document. The XSLT processor may perform the transformation by matching the nodes in the source structured document with the transformation rules, in the XSLT stylesheet, and applying the corresponding transformation rules to the node. The system may store several transformation files for performing different transformations. For example, different transformation files may be stored in the system to transform the source structured document index file, and the portions of the source structured document referred by the placeholders.

For transforming the source structured document index file, the transformation rules may be applied on the source structured document index file to transform the remaining portion of the source structured document, included in the source structured document index file, to obtain a remaining portion of the target document. An interim result, which includes the remaining portion of the target document and the placeholders in the source structured document index file, may be obtained after the transformation operation on the source structured document index file. In the above example, a source structured document index transformation file for transforming the source structured document index file may include:

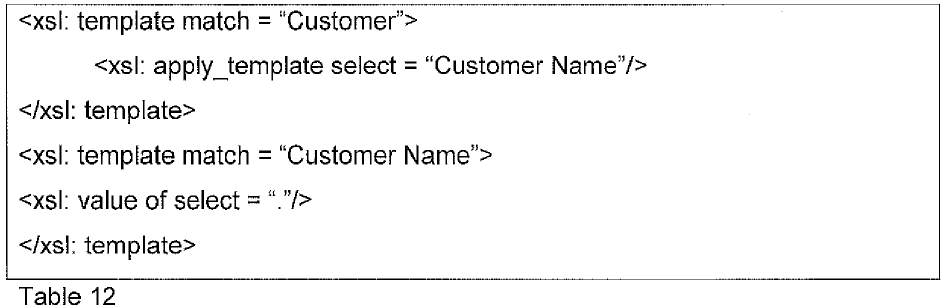

As shown in Table 12, the source structured document index transformation file includes the transformation rule <xsl:template match>, which checks whether a node of the source structured document is a "customer name". In case the node is a "customer name" node, the transformation rule <xsl: value of select = "."/>, included in the source structured document index transformation file extracts the value of the node ("Customer Name"), from the source structured document, and places the extracted node value in the output structured document (interim result, in this case). In the above example, the value of the <customer name> node, BIG CUSTOMER, is placed in the interim result, shown in Table 13, obtained after transforming the source structured document index file. In this case, the node name (CUSTOMER) is used as the URI which is also contained in the placeholder of the source structured document index file and which identifies the selected node and corresponding document portion of the source structured document file. The interim result obtained after applying the transformation rule to the source structured document index file, shown in Table 13, includes:

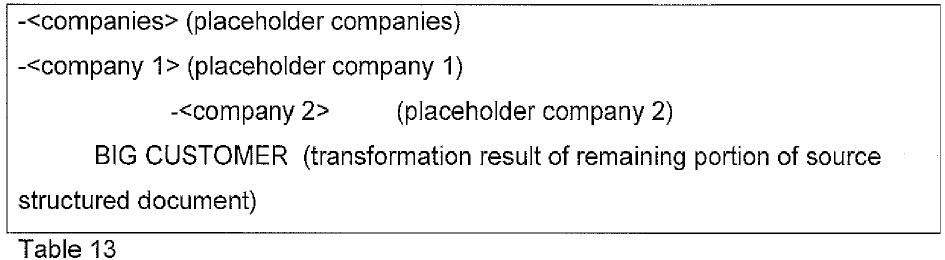

As shown the interim result, shown in Table 13, includes the transformation result of the remaining portion of the source structured document (remaining portion of the target document) and the placeholders (<companies>, <company 1>, and <company 2>) defined in the source structured document. Next at block 212 the interim result is traversed to identify the URIs of the placeholders in the interim result. In the above example, the interim result is traversed to identify three placeholders <companies>, <company 1>, and <company 2> comprising the URIs 'compaines', 'company 1' and 'company 2'. Next at block 214 the portion of the source structured document referred by the placeholders, included in the interim result, are retrieved for transforming these portions of the source structured document (block 216). In one embodiment, the structured document files storing the portion of the source structured document referred by the placeholders, in the interim result file, are retrieved one by one for performing the transformation operation. The portions of the source structured document may be transformed using the transformation rules, included in the transformation files, to obtain portions of the target document. The transformation operation may be performed in several steps; at each step one of the portions of the source structured document, referred by the placeholders, may be loaded in a memory of the system for performing a transformation operation on the portion of the source structured document. The transformation operation may be repeated until all the portions of the source structured document, referred by the placeholders, are transformed to obtain the portions of the target document. For example, suppose that the interim result file includes three placeholders whose URIs refer three different portions of the source structured document. The first portion of the source structured document referred by the first placeholder in the interim result may be retrieved and loaded in the memory. The transformation operation may be applied on the first portion of the source structured document to obtain a first portion of the target document. After obtaining the first portion of the target document, the second portion of the source structured document referred by the second placeholder in the interim result may be retrieved for transforming the second portion of the source structured document to a second portion of the target document. Finally after obtaining the second portion of the target document, the third portion of the source structured document referred by the third placeholder in the interim result file may be retrieved for transforming the third portion of the source structured document.

Loading the document portions identified by the URIs in the placeholders one by one in the memory, for performing the transformation operation, ensures that the memory consumed depends on the complexity of transforming the portion of source structured document and not based on the size of the source structured document. As discussed above, different transformation files may be stored in the system for transforming different portions of the source structured document. In the above example, as the portion 1 and the portion 2 of the source structured document referred by the placeholder <company 1> and <company 2>, respectively, include similar elements, a single transformation file may be used for transforming the portion 1 and the portion 2 of the source structured document. The single transformation file, shown in Table 14, may include:

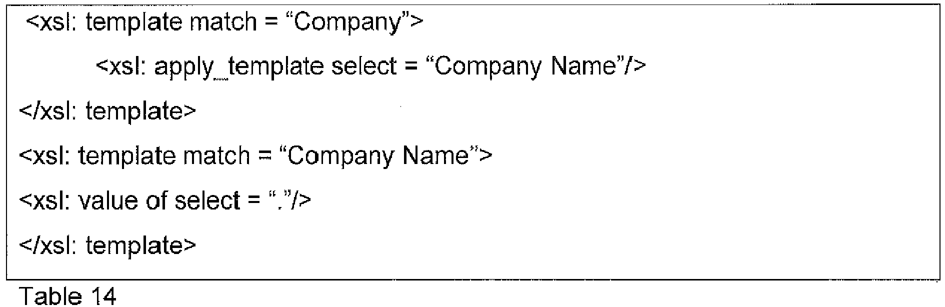

The first portion of the source structured document, shown in Table 8, may be loaded in the memory and the transformation rules in the transformation file may be applied on the first portion of the source structured document to obtain a first portion of the target document, shown in Table 15, which includes:

**Table 15**

| |
|---|
| HAPPY COMPANY |
| SUNNYVALE |

After obtaining the first portion of the target document, the second portion of the source structured document, shown in Table 9, may be loaded in the memory and the transformation rules in the single transformation file, shown in Table 9, may be applied on the second portion of the source structured document, shown in Table 16, to obtain a second portion of the target document, which includes:

**Table 16**

| |
|---|
| WINNER INC. |
| NEW JERSEY |

Finally at block 218, a target document is generated based on the portions of the target document obtained at block 216 and the interim result obtained at block 210. In one embodiment, the target document may be obtained by combining the portions of the target document obtained at block 216 and the remaining portion of the target document in the interim result obtained at block 210. The target document may be generated by replacing the portion of the source structured document with the corresponding portions of the target document. In the above example, the first portion, the second portion and the remaining portion of the source structured document are replaced by the first portion of the target document shown in Table 15, the second portion of the target document shown in Table 16, and the remaining portion of the target document included in the interim result shown in Table 13, to obtain the target document, shown in Table 17, which includes:

**Table 17**

| |
|---|
| HAPPY COMPANY |
| SUNNY VALE |
| WINNER INC. |
| NEW JERSEY |
| BIG CUSTOMER |

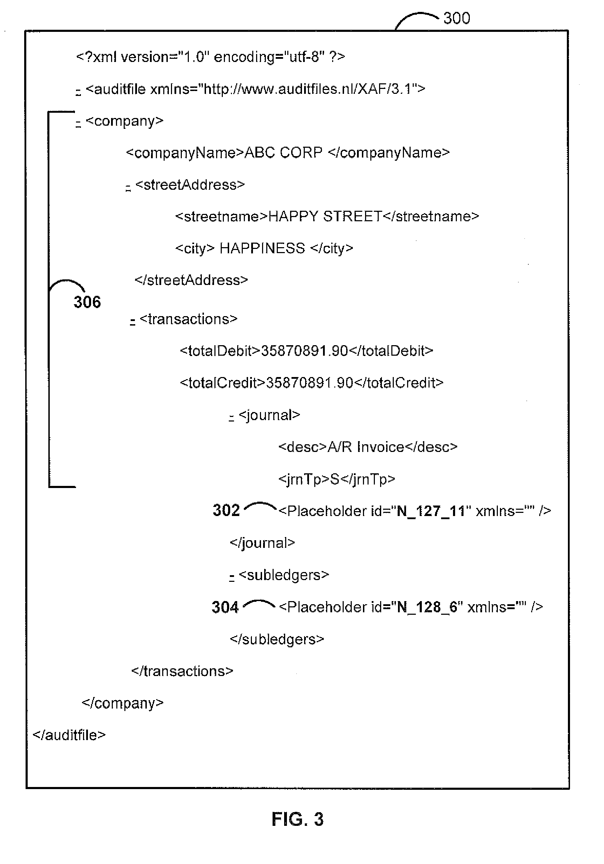

FIG. 3 is an exemplary block diagram illustrating a source structured document index file 300, according to an embodiment. As discussed above, the source structured document index file may be created directly from a source data, such as a business data. The source structured document index file 300 is created based on an audit data of a company. The source structured document index file 300 includes a first placeholder 302 that has a URI in the form of an id as "N_127_11" and a second placeholder 304 that has a URI in the form of an id as "N_128_6." The first placeholder 302 and the second placeholder 304 may refer to different portions of the audit data as selected by the user. The source structured document index file 300 may also include a remaining portion 306 of the audit data of the company, which is not referred by the first placeholder 302 and the second placeholder 304. The source structured document index file 300 includes nodes <company>, <companyName>, <streetAddress>, <streetname>, <city>, <transactions>, <totalDebit>, <totalCredit>, <journal>, <desc>, <jrnTp>, and <subledgers>.

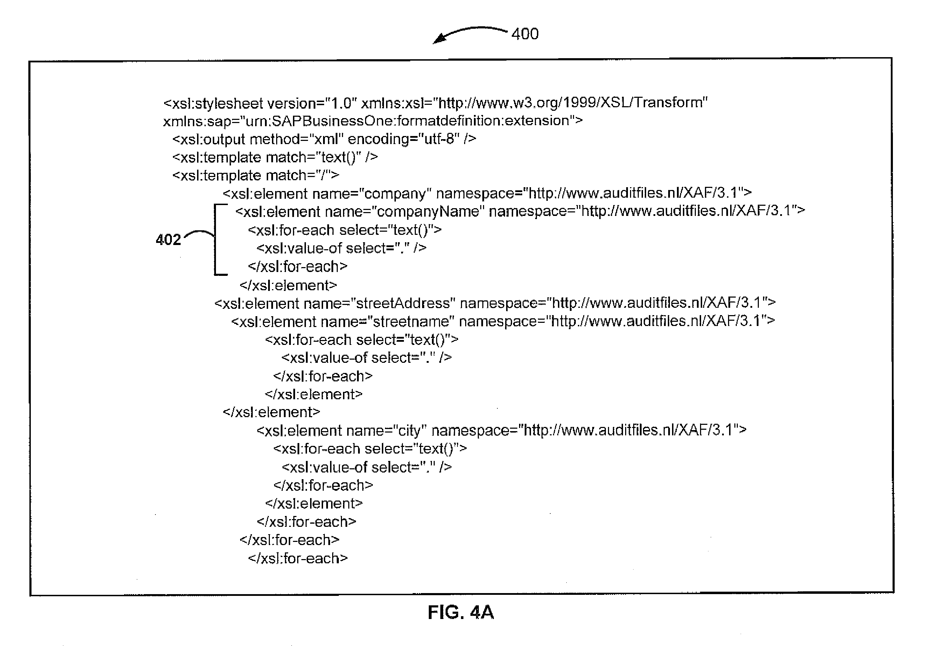

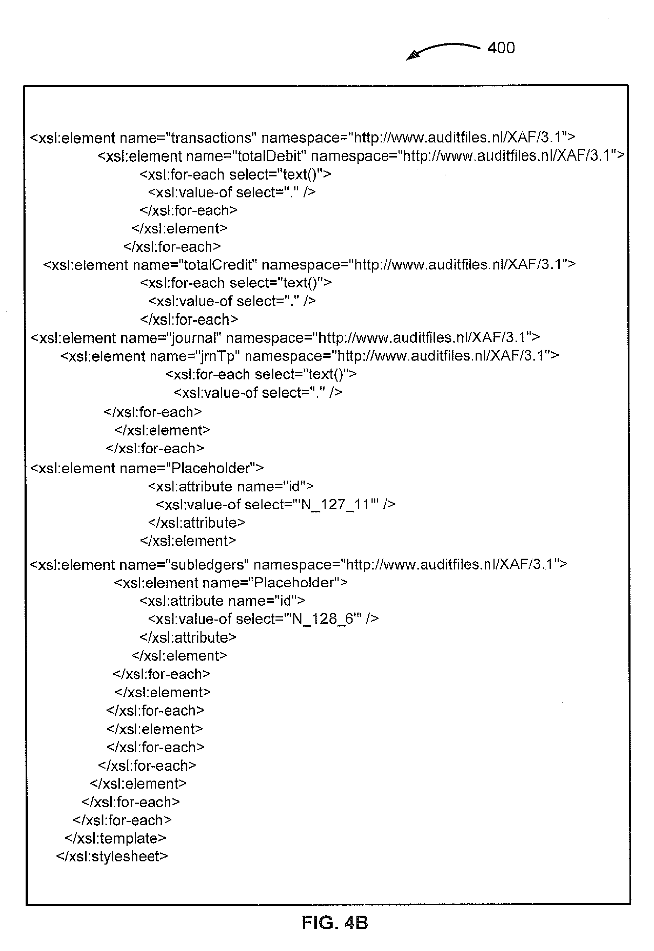

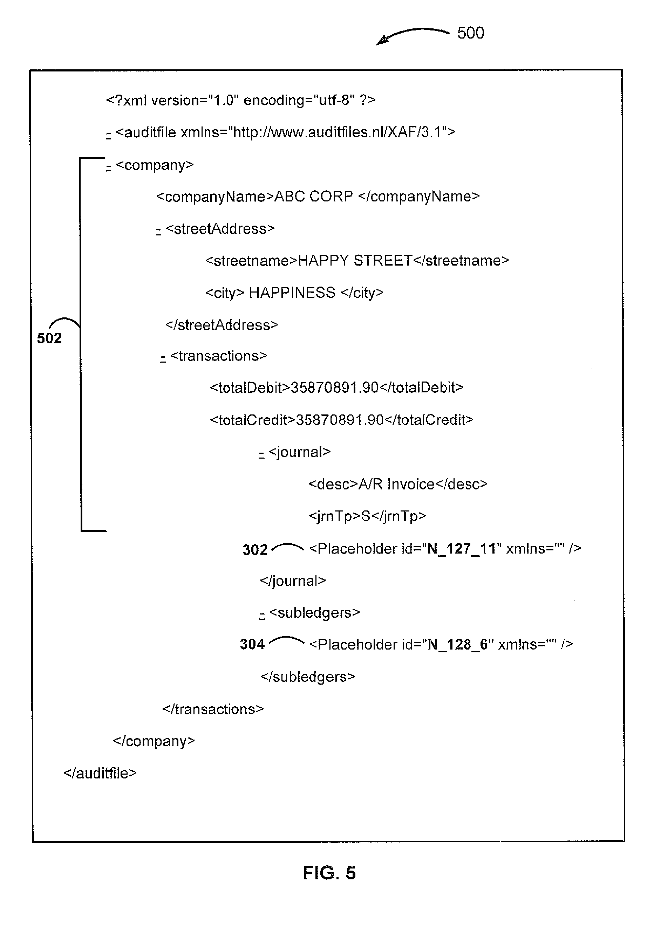

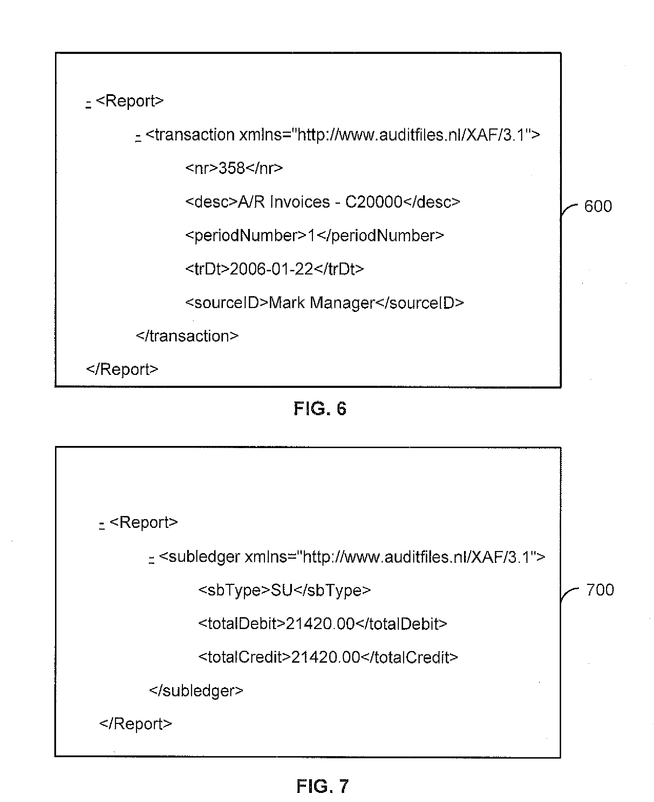

FIGS. 4A-B is an exemplary block diagram illustrating a transformation file 400 for transforming the source structured document index file 300 of FIG. 3, according to an embodiment. The transformation file 400 may include transformation rules for each of the nodes of the source structured document. For example, the transformation rule 402 for a node "companyName", included in the source structured document index file 300 of FIG. 3, is defined to retrieve the node "companyName" and the value of the node "companyName" (ABC CORP.) from the source structured document index file 300 of FIG. 3 and places it in a target document (which, in this case is an interim result file). Similarly, the transformation file 400 includes transformation rules for retrieving other nodes and their corresponding values from the source structured document index file 300 of FIG. 3 and placing them in the target document (interim result file). FIG. 5 illustrates an exemplary block diagram illustrating an interim result file 500 obtained after transforming the source structured document index file 300 of FIG. 3 using the transformation file 400 of FIG. 4, according to an embodiment. The interim result file 500 includes the transformation result 502 of the remaining portion of the audit data 306 included in the source structured document index file 300 of FIG. 3. The interim result file 500 also includes the first placeholder 302 and the second placeholder 304 included in the source structured document index file 300 of FIG. 3. Next, the interim result file 500 is traversed to identify the placeholders, the first placeholder 302 and the second placeholder 304, in the interim result file 500. The first placeholder 302 and the second placeholder 304 may refer to a first portion and a second portion of the audit data. FIG. 6 is an exemplary block diagram illustrating a first portion of audit data file 600 referred by the first placeholder 302 in the interim result file 500 of FIG. 5, according to an embodiment. The first portion of audit data file 600 may store a first portion of the audit data referred by the first placeholder 302 of FIG. 5. As shown, the first portion of audit data file 600 stores a transaction data of a report, which includes a number node (<nr>), a description node (<desc>), a period number node (<period number>), a transaction date node (<trDt), and a source ID node (<sourceID>).

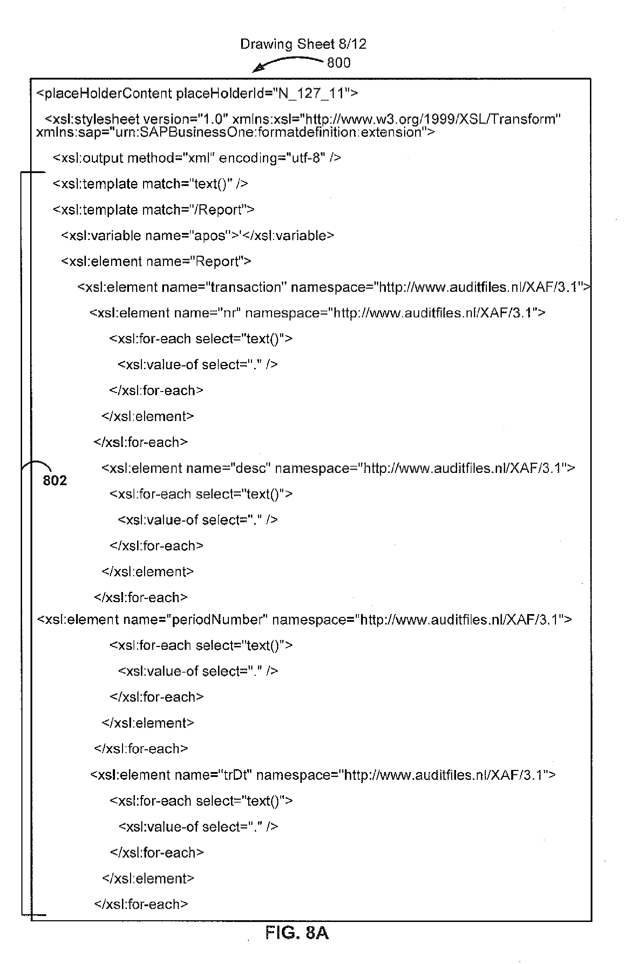

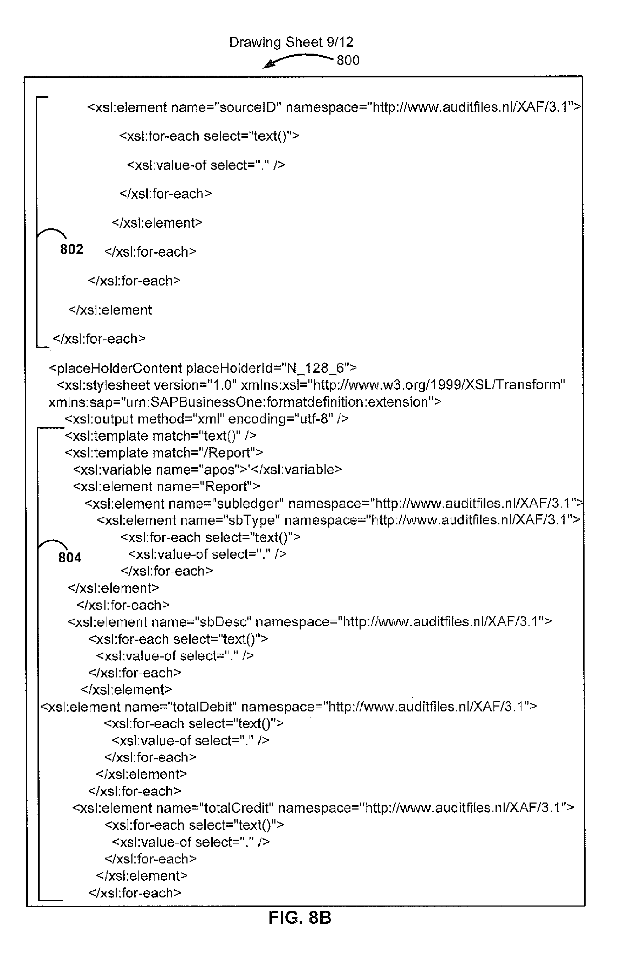

FIG. 7 is an exemplary block diagram illustrating a second portion of audit data file 700 referred by the second placeholder 302 in the interim result file 500 of FIG. 5, according to an embodiment. The second portion of audit data file 700 may store a second portion of the audit data referred by the second placeholder 302 of FIG. 5. As shown, the second portion of audit data file 700 stores information of a sub-ledger in the audit data, which includes sabledger type (<nr>), a total debit node (<totalDebit>), and total credit node (<totalCredit>). FIGS. 8A-B is an exemplary block diagram illustrating a transformation file 800 for transforming the first portion of audit data file 600 of FIG. 6 and the second portion of audit data file 700 of FIG. 7, according to an embodiment. The transformation file 800 includes transformation rules 802 for transforming the first portion of the audit data stored in the file 600 of FIG. 6. The transformation file 800 also includes transformation rule 804 for transforming the second portion of audit data stored in the file 700 of FIG. 7. In one embodiment, separate transformation files may be used for transforming the first portion of audit data file 600 of FIG. 6 and the second portion of audit data file 700 of FIG. 7. Initially, the first portion of the audit data file 600 storing the first portion of the audit data may be loaded in the memory of the system. Next, the transformation rules may be applied on the first portion of the audit data to obtain a first portion of a target document. Next, the second portion of audit data file 700 of FIG. 7 storing the second portion of the audit data may be loaded in the memory of the system. Finally, the transformation rule may be applied on the second portion of the audit data to obtain a second portion of the target document. The transformation file include transformation rules (xsl: for each select = "text ()> <xsl: value of select = "."/> for each of the nodes in the first portion of the audit data included in the file 600 of FIG. 6 and the second portion of the audit data included in the file 700 of FIG. 7. These transformation rules retrieve the nodes and the corresponding node values from the first portion of audit data file 600 of FIG. 6 and the second portion of audit data file 700 of FIG. 7 and place it in a first portion and a second portion of the target document, respectively.

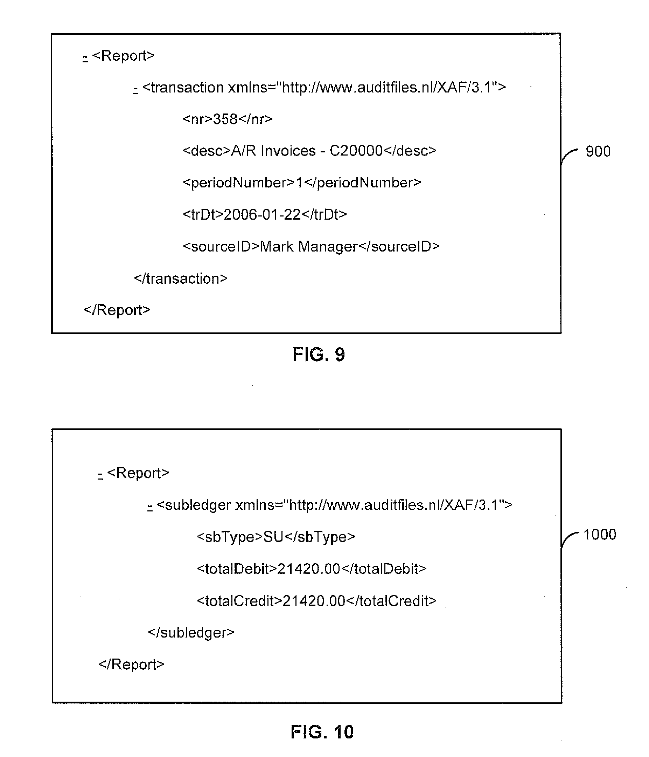

FIG. 9 is an exemplary block diagram illustrating a first portion of the target document 900 obtained after transforming the first portion of audit data included in the first portion of the audit data file 600 of FIG. 6, according to an embodiment. The first portion of the target document 900 is obtained by applying the transformation rules 802 included in the transformation file 800 of FIG. 8A-B to the first portion of the audit data included in the file 600 of FIG. 6. The first portion of target document 900 includes the nodes and the corresponding value of nodes retrieved, after performing the transformation operation, from the first portion of the audit data file 600 of FIG. 6.

FIG. 10 is an exemplary block diagram illustrating a second portion of the target document 1000 obtained after transforming the second portion of audit data included in the second portion of the audit data file 700 of FIG. 7, according to an embodiment. The second portion of the target document 1000 is obtained by applying the transformation rules 804 included in the transformation file 800 of FIG. 8A-B to the second portion of the audit data included in the file 700 of FIG. 7. The second portion of target document1000 includes the nodes and the corresponding value of nodes retrieved, after performing the transforming operation, from the second portion of the audit data file 700 of FIG. 7.

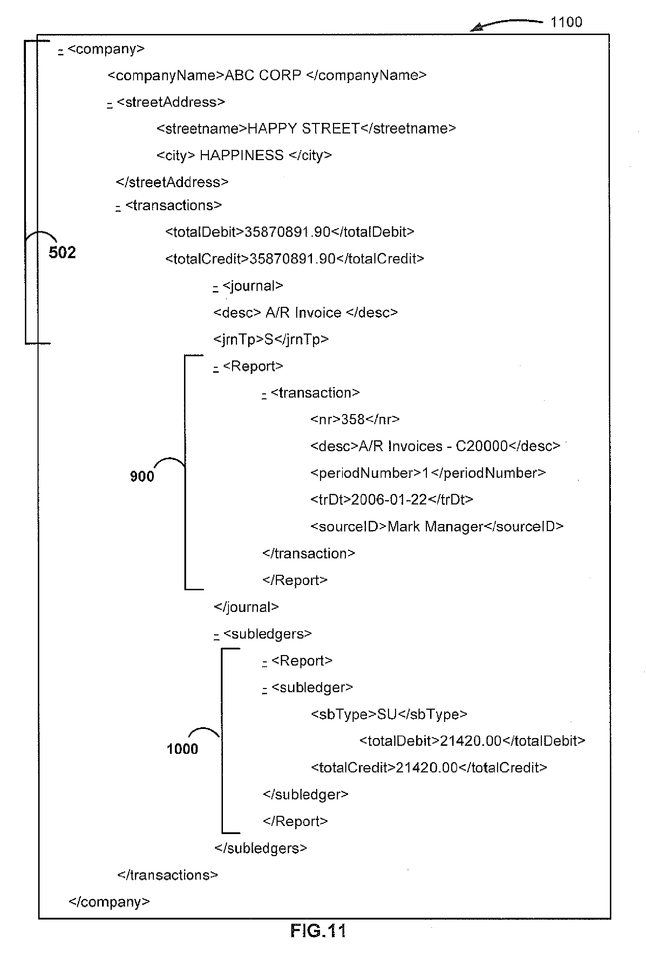

FIG. 11 is an exemplary block diagram illustrating a target document 1100 obtained based on the first portion of the target document 900 of FIG. 9, the second portion of the target document 1000 of FIG. 10, and the interim result file 500 of FIG. 5, according to an embodiment. The target document 1100 may be obtained by combining the first portion of the target document 900 of FIG. 9, the second portion of the target document 1000 of FIG. 10, and the transformation result of remaining portion of the audit data 502 included in the interim result 500 of FIG. 5. In one embodiment, the target document 1100 is obtained by replacing the remaining portion of the audit data 306, the first placeholder 302, and the second placeholder 304 included in the source structured document index file 300 of FIG. 3 with the transformation result of the remaining portion of audit data 502 included in the interim result of FIG. 5, the first portion of the target document 900 of FIG. 9, and the second portion of the target document 1000 of FIG. 10, respectively.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls or web services being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

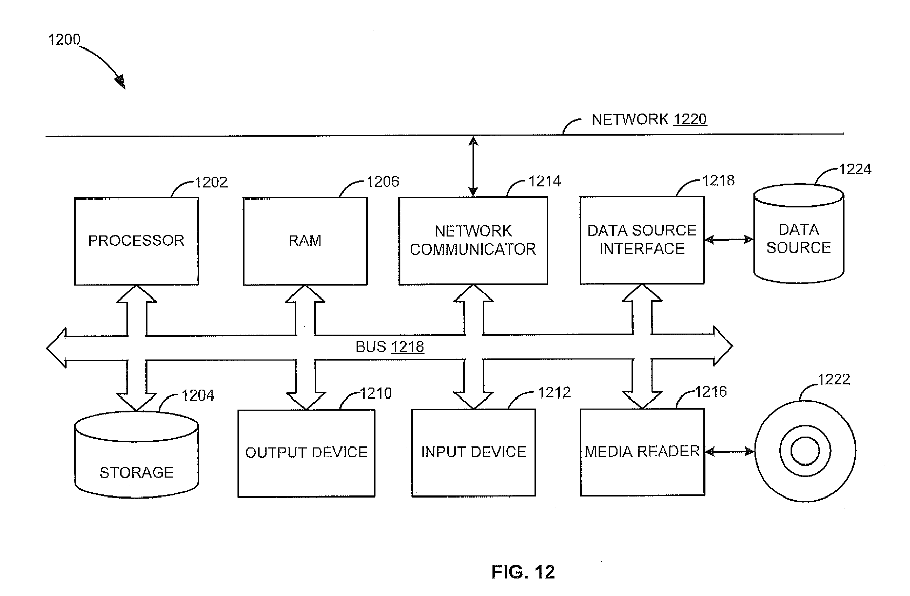

FIG. 12 is a block diagram of an exemplary computer system 1200. The computer system 1200 includes a processor 1202 that executes software instructions or code stored on a computer readable storage medium 1222 to perform the above-illustrated methods of the invention. The computer system 1200 includes a media reader 1216 to read the instructions from the computer readable storage medium 1222 and store the instructions in storage 1204 or in random access memory (RAM) 1206. The storage 1204 provides a large space for keeping static data where at least some instructions could be stored for later execution. The stored instructions may be further compiled to generate other representations of the instructions and dynamically stored in the RAM 1206. The processor 1202 reads instructions from the RAM 1206 and performs actions as instructed. According to one embodiment of the invention, the computer system 1200 further includes an output device 1210 (e.g., a display) to provide at least some of the results of the execution as output including, but not limited to, visual information to users and an input device 1212 to provide a user or another device with means for entering data and/or otherwise interact with the computer system 1200. Each of these output devices 1210 and input devices 1212 could be joined by one or more additional peripherals to further expand the capabilities of the computer system 1200. A network communicator 1214 may be provided to connect the computer system 1200 to a network 1220 and in turn to other devices connected to the network 1220 including other clients, servers, data stores, and interfaces, for instance. The modules of the computer system 1200 are interconnected via a bus 1218. Computer system 1200 includes a data source interface 1208 to access data source 1224. The data source 1224 can be accessed via one or more abstraction layers implemented in hardware or software. For example, the data source 1224 may be accessed by network 1220. In some embodiments the data source 1224 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments of the invention. One skilled in the relevant art will recognize, however that the invention can be practiced without one or more of the specific details or with other methods, components, techniques, etc. In other instances, well-known operations or structures are not shown or described in details to avoid obscuring aspects of the invention. Although the processes illustrated and described herein include series of steps, it will be appreciated that the different embodiments of the present invention are not limited by the illustrated ordering of steps, as some steps may occur in different orders, some concurrently with other steps apart from that shown and described herein. In addition, not all illustrated steps may be required to implement a methodology in accordance with the present invention. Moreover, it will be appreciated that the processes may be implemented in association with the apparatus and systems illustrated and described herein as well as in association with other systems not illustrated.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description. Rather, the scope of the invention is to be determined by the following claims, which are to be interpreted in accordance with established doctrines of claim construction.

## Claims

1. A computer implemented method for transforming a source structured document (102) to a target document, the method comprising:
- receiving (202) a request to transform the source structured document;
- receiving (204) a selection of a first node and one or more further nodes in the source structured document, the first node identifying a first portion of the source structured document, and each of the one or more further nodes identifying a further portion of the source structured document;
- based on the received selection, dividing (206) the source structured document into the first portion and the one or more further portions (112) of the source structured document;
- based on a transformation rule, transforming (216) the first portion of the source structured document to obtain a first portion of the target document;
- based on the transformation rule, transforming the one or more further portions of the source structured document to obtain one or more further portions of the target document; and
- generating (218) the target document based on the obtained first portion of the target document and the obtained one or more further portions of the target document.

2. The computer implemented method according to claim 1, wherein the transformation of the first and each of the further document portion is executed in a sequential order, whereby each of the source document portions to be transformed is loaded into a main memory of a computer for executing the transformation.

3. The computer implemented method according to any one of the preceding claims, further comprising:
- storing, in a data storage of a computer, the first portion of the structured document as a first structured document file, the first structured document files being identifiable via a first URI;
- storing, in the data storage , each of the one or more further portions of the source structured document as a further structured document file, the each of the further structured document files being identifiable via a respective further URI; and
- storing a first placeholder comprising the first URI and one or more further placeholders respectively comprising one of the further URIs and a remaining portion of the source structured document in a source structured document index file.

4. The computer implemented method according to claim 3, wherein transforming the first portion of the structured document includes:
- based on the transformation rule, transforming the source structured document index file to obtain an interim result file, the interim result file including the first placeholder, the one or more further placeholders, and a transformation result of the remaining portion of the source structured document;
- identifying the first placeholder included in the interim result file;
- retrieving, from the data storage , the first structured document file referred by the first URI contained in the identified first placeholder; and
- based on the transformation rule, transforming the first structured document file to obtain the first portion of the target document.

5. The computer implemented method according to claim 4, wherein transforming the one or more further portions of the structured document includes:
- identifying the one or more further placeholders included in the interim result file;
- retrieving, from the data storage , the one or more further structured document files referred by the further URIs contained in the one or more further placeholders; and
- based on the transformation rule, transforming the one or more further structured document files to obtain the one or more further portions of the target document.

6. The computer implemented method according to any one of the preceding claims, wherein generating the target document includes:
- replacing the first portion of the source structured document with the obtained first portion of the target document; and
- replacing the one or more further portions of the source structured document with the obtained one or more further portions of the target document.

7. The computer implemented method according to any one of the previous claims 3-6, wherein the data storage is a non-volatile storage medium.

8. The computer implemented method according to any one of the previous claims 3-6, wherein the data storage is a non-volatile storage medium acting as main memory.

9. The computer implemented method according to any one of the previous claims, wherein the transformation rules executing the transformation are contained in different transformation files, each transformation file correspdonding to one of the first and one or more further document portions.

10. The computer implemented method according to any one of the previous claims, wherein the transforming of the first and the one or more source structured document portions is an XSL transformation.

11. The computer implemented method according to any one of the previous claims, wherein the identification of the first source structured document portion by selecting the first node comprises gathering all direct and indirect child nodes of the selected node, whereby the gathered nodes constitute the first source structured document portion.

12. The computer implemented method according to any one of the previous claims, wherein the identification of the first source structured document portion by selecting the first node comprises gathering all nodes in the source structured document being of the same type as the selected node, whereby the gathered nodes constitute the first source structured document portion.

13. The computer implemented method according to any one of the previous claims, wherein the URI identifying one of the first or further source structured document portions is identical to the name of the node having been selected and having identified said first or further source structured document portion.

14. A computer readable storage medium comprising instructions which, when executed by a processor, cause the processor to execute a method in accordance with any one of claims 1-13.

15. A computer system for transforming a source structured document to a target document, the computer system comprising:
- a memory to store a program code; and
- a processor communicatively coupled to the memory, the processor configured to execute the program code to:
o receiving (202) a request to transform the source structured document;
o receiving (204) a selection of a first node and one or more further nodes in the source structured document, the first node identifying a first portion of the source structured document, and each of the one or more further nodes identifying a further portion of the source structured document;
o based on the received selection, dividing (206) the source structured document into the first portion and the one or more further portions (112) of the source structured document;
o based on a transformation rule, transforming (216) the first portion of the source structured document to obtain a first portion of the target document;
o based on the transformation rule, transforming the one or more further portions of the source structured document to obtain one or more further portions of the target document; and
o generating (218) the target document based on the obtained first portion of the target document and the obtained one or more further portions of the target document.
